# EUROPEAN PATENT APPLICATION

(11) **EP 4 787 397 A1**
(43) Date of publication of application: **05.08.2026**
(21) Application number: 24871586.4
(22) Date of filing: 20.08.2024
(51) Int. Cl.: H01B 1/10, C03C 3/32, C03C 4/14, C03C 10/00, C03C 10/16, H01B 1/06, H01B 13/00, H01M 4/62, H01M 10/052, H01M 10/0562

(54) **SULFIDE SOLID ELECTROLYTE AND METHOD FOR MANUFACTURING SAME**

(30) Priority: 28.09.2023 JP 2023168395
(71) Applicant: AGC Inc., Tokyo 100-8405 (JP)
(72) Inventor: FUJII, Naoki, Tokyo 100-8405 (JP); KITAMURA, Riku, Tokyo 100-8405 (JP)
(74) Representative: Müller-Boré & Partner Patentanwälte PartG mbB
(86) International application number: PCT/JP2024/029445
(87) International publication number: WO 2025/069784

(57) **Abstract**

The present invention pertains to a sulfide solid electrolyte containing a sulfide-based glass phase, wherein: when differential scanning calorimetry is performed at a heating rate of 5°C/min, the sulfide-based glass phase has an exothermic peak at which a highly ionically conductive crystal is precipitated; the exothermic peak can be separated into two or more peaks; and the temperature difference between the peak top of the peak farthest on the high temperature side and the peak top of the peak farthest on the low temperature side among the two or more peaks separated by the peak separation is 0.5°C or more.

## Description

### TECHNICAL FIELD

The present invention relates to a sulfide solid electrolyte and a method for producing the same.

### BACKGROUND ART

Lithium ion secondary batteries are widely used in portable electronic devices such as a mobile phone and a notebook computer, motor vehicles, or the like.

In the related art, a liquid electrolyte has been used in a lithium ion secondary battery, but there is a concern of liquid leakage, ignition, and the like, and it is necessary to increase the size of a case for safety design. It has also been desired to improve the short battery life and the narrow operating temperature range.

In contrast, attention has been paid to an all-solid-state lithium secondary battery in which a solid electrolyte is used as an electrolyte of a lithium ion secondary battery, from the viewpoint of improving safety, charging and discharging at a high speed, and reducing the size of the case.

The solid electrolytes are roughly classified into sulfide solid electrolytes and oxide solid electrolytes. Sulfide ions constituting the sulfide solid electrolytes have higher polarizability and higher ion conductivity than those of oxide ions constituting the oxide solid electrolytes. As the sulfide solid electrolytes, there has been known LGPS crystals such as Li₁₀GeP₂S₁₂, argyrodite crystals such as Li₆PS₅Cl, LPS crystallized glasses such as Li₇P₃S₁₁ crystallized glass, and the like.

As a solid electrolyte having excellent water resistance and a high ion conductivity, Patent Literature 1 discloses a solid electrolyte of a sulfide-based glass in which Li₂S/P₂S₅/LiI = 63/21/16 or 52/17/31, or a sulfide-based glass ceramic obtained by crystallizing a part of a sulfide-based glass in which Li₂S/P₂S₅/LiBr = 64/21/14. These are less likely to generate hydrogen sulfide even when exposed to a gas containing moisture.

### CITATION LIST

### PATENT LITERATURE

Patent Literature 1: JP2018-049834A

### SUMMARY OF INVENTION

### TECHNICAL PROBLEM

However, since the sulfide-based glass obtained using the production method disclosed in Patent Literature 1 is powdery, it is difficult to produce a sulfide solid electrolyte sheet, that is, a bulk inorganic sheet.

Therefore, an object of the present invention is to provide a sulfide solid electrolyte containing a sulfide-based glass phase, which has excellent water resistance and an excellent ion conductivity and has high strength when formed into a sheet shape, and a method for producing the same.

### SOLUTION TO PROBLEM

As a result of intensive studies, the present inventors have found that, in obtaining a sulfide-based glass phase by heating and melting raw materials followed by cooling, when the heating and cooling are performed under ambient pressure, stirring during the melting is adjusted, and the cooling is performed at an extremely high cooling rate, a novel sulfide-based glass phase having different physical properties can be obtained even with a known composition in the related art. Then, the present inventors have found that the above problems can be solved by a sulfide solid electrolyte containing such a sulfide-based glass phase, and have completed the present invention.

That is, the present invention relates to the following [1] to [8].
[1] A sulfide solid electrolyte including a sulfide-based glass phase,
   in which the sulfide-based glass phase has an exothermic peak at which a highly ion-conductive crystal is precipitated when subjected to a differential scanning calorimetry measurement at a heating rate of 5°C/min,
   the exothermic peak can be separated into two or more peaks, and
   a temperature difference between a peak top of a peak on the highest temperature side and a peak top of a peak on the lowest temperature side among the two or more peaks obtained by the peak separation is 0.5°C or higher.
[2] The sulfide solid electrolyte according to [1], in which the temperature difference between the peak tops is 20°C or lower.
[3] The sulfide solid electrolyte according to [1] or [2], in which the exothermic peak is present at 190°C to 250°C.
[4] The sulfide solid electrolyte according to any one of [1] to [3],
   in which the sulfide solid electrolyte includes Li, P, and S as constituent elements, and
   a composition of the sulfide solid electrolyte satisfies Li: 30 at% to 50 at%, P: 5 at% to 15 at%, and S: 30 at% to 60 at%, and 2.5 ≤ Li/P ≤ 7.
[5] The sulfide solid electrolyte according to [4],
   in which the sulfide solid electrolyte further includes Ha as a constituent element,
   the Ha is at least one selected from the group consisting of F, Cl, Br, and I, and
   the composition of the sulfide solid electrolyte further satisfies Ha: 1 at% to 12 at%.
[6] The sulfide solid electrolyte according to any one of [1] to [5], in which a content of the sulfide-based glass phase is 10 mass% or more.
[7] The sulfide solid electrolyte according to any one of [1] to [6], in which the sulfide solid electrolyte is in a flake shape or a sheet shape having a thickness of 5 µm or more.
[8] A method for producing the sulfide solid electrolyte according to any one of claims 1 to 7, the method including: in order,
   mixing raw materials to obtain a raw material mixture;
   heating the raw material mixture to obtain a melt; and
   cooling and solidifying the melt to obtain the sulfide-based glass phase,
   in which during the heating, a molten liquid is not stirred or stirred under a condition of less than 40 rpm using a stirrer,
   the heating and the cooling and solidifying are performed under ambient pressure, and
   a cooling rate during the cooling and solidifying is 100°C/sec or more.

### ADVANTAGEOUS EFFECTS OF INVENTION

According to the present invention, a sulfide solid electrolyte containing a sulfide-based glass phase, which has excellent water resistance and an excellent ion conductivity and has high strength when formed into a sheet shape can be obtained. Therefore, when the sulfide solid electrolyte is used in an all-solid-state lithium secondary battery, favorable battery characteristics can be achieved.

### BRIEF DESCRIPTION OF DRAWINGS

FIG. 1 is a flow diagram illustrating a method for producing a sulfide solid electrolyte according to the present embodiment.
FIG. 2 is a differential scanning calorimetry (DSC) curve illustrating a relationship between a heat amount and a temperature when a DSC measurement was performed on the sulfide solid electrolyte obtained in Example 1 at a heating rate of 5°C/min.
FIG. 3 is a DSC curve obtained by enlarging and curve-fitting the exothermic peak at which a highly ion-conductive crystal is precipitated in the DSC curve obtained in FIG. 2.
FIG. 4 is a differential scanning calorimetry (DSC) curve illustrating a relationship between a heat amount and a temperature when the DSC measurement was performed on the sulfide solid electrolyte obtained in Example 2 at a heating rate of 5°C/min.
FIG. 5 is a DSC curve obtained by enlarging and curve-fitting the exothermic peak at which a highly ion-conductive crystal is precipitated in the DSC curve obtained in FIG. 4.
FIG. 6 is a scanning electron microscope (SEM) image of the sulfide solid electrolyte obtained in Example 1 after pulverization for a strength test.
FIG. 7 is an SEM image of the sulfide solid electrolyte obtained in Example 2 after pulverization for a strength test.

### DESCRIPTION OF EMBODIMENTS

Hereinafter, the present invention is described in detail, but the present invention is not limited to the following embodiment, and can be freely modified and implemented without departing from the gist of the present invention. In addition, "to" indicating a numerical range is used to include numerical values written before and after it as a lower limit value and an upper limit value.

### <<Sulfide Solid Electrolyte>>

The sulfide solid electrolyte according to the present embodiment contains a sulfide-based glass phase. The sulfide-based glass phase has an exothermic peak at which a highly ion-conductive crystal is precipitated when subjected to a differential scanning calorimetry (DSC) measurement at a heating rate of 5°C/min.

The exothermic peak at which a highly ion-conductive crystal is precipitated can be separated into two or more peaks, and a temperature difference between a peak top of a peak on the highest temperature side and a peak top of a peak on the lowest temperature side among the two or more peaks obtained by peak separation is 0.5°C or higher.

### <Sulfide-based Glass Phase>

As described above, the sulfide-based glass phase in the present embodiment has an exothermic peak at which a highly ion-conductive crystal is precipitated when subjected to the DSC measurement at the heating rate of 5°C/min, and the exothermic peak can be separated into two or more peaks. The temperature difference between the peak top of the peak on the highest temperature side and the peak top of the peak on the lowest temperature side among the two or more peaks obtained by peak separation is 0.5°C or higher.

The method for determining whether the exothermic peak is caused by the precipitation of the highly ion-conductive crystal is as follows.

First, the sulfide solid electrolyte is subjected to the DSC measurement at the heating rate of 5°C/min, and is heat-treated for 10 minutes at the peak top temperature of the observed exothermic peak. The above exothermic peak indicates crystallization. Therefore, even when a measurement sample is a sulfide solid electrolyte, the above exothermic peak can be determined to be the exothermic peak of the sulfide-based glass phase contained in the sulfide solid electrolyte.

When an increase in ion conductivity of the sulfide solid electrolyte is observed before and after the heat treatment, it can be determined that such exothermic peak is caused by the precipitation of the highly ion-conductive crystal.

Here, the increase in ion conductivity refers to a conductivity of the element serving as a carrier contained in constituent elements of the sulfide-based glass phase. For example, when lithium (Li) is contained in the sulfide-based glass phase, the presence or absence of an increase in lithium ion conductivity before and after the heat treatment may be confirmed.

Examples of the element serving as a carrier include sodium (Na), potassium (K), magnesium (Mg), and fluorine (F) in addition to Li, and Li is preferred when the sulfide solid electrolyte is applied to an all-solid-state lithium secondary battery.

The presence or absence of an increase in ion conductivity before and after the heat treatment can be determined by an AC impedance measurement using, as a measurement sample, a powder compact obtained by compacting a powder of the sulfide solid electrolyte at 380 MPa. Specifically, the AC impedance measurement of the measurement sample is performed at a measurement frequency of 100 Hz to 1 MHz, a measurement voltage of 100 mV, and a measurement temperature of 25°C, and a value determined from the obtained Nyquist plots is regarded as the ion conductivity.

As described above, when it can be determined that the exothermic peak is caused by the precipitation of the highly ion-conductive crystal, next, the peak separation of the exothermic peak is performed.

The peak separation is performed by fitting using a Lorentz function. Specifically, after performing baseline correction for the exothermic peak of the DSC curve, a predetermined number of Lorentz functions are added to create a fitting function. Parameters of the fitting function are obtained from curve data of the DSC curve using the least squares method. By performing the peak separation, a peak top temperature of each peak can be obtained.

In the sulfide-based glass phase in the present embodiment, the exothermic peak can be separated into two or more peaks by the peak separation. Among the two or more peaks obtained by the peak separation, the peak top temperature of the peak on the lowest temperature side is denoted as T1, and the peak top temperature of the peak on the highest temperature side is denoted as T2. The temperature difference between the peak top of the peak on the highest temperature side and the peak top of the peak on the lowest temperature side, that is, a temperature represented by (T2 - T1) is 0.5°C or higher. Accordingly, the strength when the sulfide solid electrolyte is formed into a sheet shape can be increased.

The reason why the strength of the sulfide solid electrolyte is increased when the temperature difference represented by (T2 - T1) is 0.5°C or higher is not clear, but is considered as follows.

The sulfide-based glass phase in the sulfide solid electrolyte according to the present embodiment is obtained by heating and melting a raw material mixture followed by rapid cooling, the details of which are described later. During the heating and melting, when the molten liquid is not stirred or is weakly stirred, the molten liquid structure becomes a heterogeneous structure to some extent. When the molten liquid is rapidly cooled, the heterogeneous structure is maintained to some extent, and glass having a non-uniform structure is formed. As a result, it is considered that a surface area newly formed when a crack extends is increased, and the surface energy is increased, so that a fracture toughness is increased, and a high-strength sulfide solid electrolyte can be formed.

The temperature difference represented by (T2 - T1) may be 0.5°C or higher, preferably 0.5°C to 20°C, more preferably 1°C to 10°C, still more preferably 1.5°C to 8°C, and still more preferably 2°C to 5°C. Here, from the viewpoint of achieving the high strength, the temperature difference is 0.5°C or higher, preferably 1.0°C or higher, more preferably 1.5°C or higher, and still more preferably 2.0°C or higher. From the viewpoint that the ion conductivity is impaired when non-uniformity of the glass material is excessively high, the temperature difference is preferably 20°C or lower, more preferably 10°C or lower, still more preferably 8°C or lower, and even more preferably 5°C or lower.

The exothermic peak is preferably present at 190°C to 250°C, more preferably present at 200°C to 245°C, and still more preferably present at 205°C to 240°C. Here, from the viewpoint of enhancing the heat treatment to promote the crystallization rate, the temperature at which the exothermic peak is present is preferably 190°C or higher, more preferably 200°C or higher, and still more preferably 205°C or higher. From the viewpoint of preventing deformation of the electrolyte during the heat treatment, the temperature at which the exothermic peak is present is preferably 250°C or lower, more preferably 245°C or lower, and still more preferably 240°C or lower.

Here, the temperature at which the exothermic peak is present means the peak top temperature. When the exothermic peak has two or more maximum points, two or more of the maximum points are preferably in the above temperature range, and among the maximum points, the maximum point on the highest temperature side and the maximum point on the lowest temperature side are more preferably in the above temperature range.

The peak top temperature T1 on the lowest temperature side after the peak separation of the exothermic peak is preferably 190°C to 245°C, more preferably 200°C to 240°C, and still more preferably 205°C to 235°C. Here, from the viewpoint of enhancing the heat treatment to promote the crystallization rate, the temperature T1 is preferably 190°C or higher, more preferably 200°C or higher, and still more preferably 205°C or higher. From the viewpoint of preventing the deformation of the electrolyte during the heat treatment, the temperature T1 is preferably 245°C or lower, more preferably 240°C or lower, and still more preferably 235°C or lower.

The peak top temperature T2 on the highest temperature side after the peak separation of the exothermic peak is preferably 195°C to 250°C, more preferably 205°C to 245°C, and still more preferably 210°C to 240°C. Here, from the viewpoint of thermal stability, the temperature T2 is preferably 195°C or higher, more preferably 205°C or higher, and still more preferably 210°C or higher. From the viewpoint of preventing the deformation of the electrolyte during the heat treatment, the temperature T2 is preferably 250°C or lower, more preferably 245°C or lower, and still more preferably 240°C or lower.

### <Constituent Elements and Composition>

The sulfide solid electrolyte according to the present embodiment preferably contains Li, P, and S as constituent elements. In addition to these, it is more preferable to contain Ha from the viewpoint of a lithium ion conductivity. Here, the Ha is at least one selected from the group consisting of F, Cl, Br, and I, and it is preferable to contain at least one of Cl and Br, and it is more preferable to contain Br, from the viewpoint of obtaining favorable oxidation resistance and favorable water resistance. It is also more preferable to contain both Cl and Br.

In the composition of the sulfide solid electrolyte according to the present embodiment, the composition ratio represented by Li/P is preferably 2.5 or more, more preferably 2.5 to 7.0, still more preferably 3.0 to 6.5, and even more preferably 3.2 to 6.2.

Here, from the viewpoint of obtaining a high lithium ion conductivity, the composition ratio is preferably 2.5 or more, more preferably 3.0 or more, and still more preferably 3.2 or more. From the viewpoint of widening a vitrification range, the composition ratio is preferably 7.0 or less, more preferably 6.5 or less, and still more preferably 6.2 or less.

In the present description, the composition ratio means the ratio of the content (at%) of each element in the sulfide solid electrolyte.

In the composition of the sulfide solid electrolyte according to the present embodiment, the composition ratio represented by S/P is preferably 3.0 to 5.0, more preferably 3.5 to 4.5, and still more preferably 3.8 to 4.2. Here, from the viewpoint of the lithium ion conductivity, the composition ratio is preferably 3.0 or more, more preferably 3.5 or more, and still more preferably 3.8 or more. From the viewpoint of water resistance, the composition ratio is preferably 5.0 or less, more preferably 4.5 or less, and still more preferably 4.2 or less.

When the sulfide solid electrolyte further contains Ha, the composition ratio represented by [(F+Cl+Br)/Ha] is preferably 0.5 or more, more preferably 0.5 to 1.0, still more preferably 0.6 to 1.0, and particularly preferably 0.8 to 1.0. Here, from the viewpoint of the oxidation resistance, the composition ratio is preferably 0.5 or more, more preferably 0.6 or more, and still more preferably 0.8 or more. The upper limit of the composition ratio is not particularly limited, and the composition ratio may be 1.0. The composition ratio of 1.0 means that I is not contained as Ha. When the sulfide solid electrolyte contains I as Ha, the composition ratio may be 0.8 or less or 0.6 or less, from the viewpoint of obtaining the effect of I.

When the sulfide solid electrolyte further contains Ha, in the composition of the sulfide solid electrolyte according to the present embodiment, the composition ratio represented by Ha/P is preferably 0.01 to 1.5, more preferably 0.1 to 1.2, and still more preferably 0.2 to 1.0. Here, from the viewpoint of the water resistance, the composition ratio is preferably 0.01 or more, more preferably 0.1 or more, and still more preferably 0.2 or more. From the viewpoint of precipitation of lithium halide crystals, the composition ratio is preferably 1.5 or less, more preferably 1.2 or less, and still more preferably 1.0 or less. Here, Ha means the total of F, Cl, Br, and I.

More specifically, the composition of the sulfide solid electrolyte according to the present embodiment preferably satisfies Li: 30 at% to 50 at%, P: 5 at% to 15 at%, and S: 30 at% to 60 at%, and more preferably satisfies Li: 30 at% to 50 at%, P: 5 at% to 15 at%, S: 30 at% to 60 at%, and Ha: 1 at% to 12 at%. In the present description, at% means atom%, that is, atomic%.

In the sulfide solid electrolyte according to the present embodiment, Li is an element responsible for ion conduction as a solid electrolyte.

In the composition of the sulfide solid electrolyte, the content of Li is preferably 30 at% to 50 at%, more preferably 35 at% to 45 at%, and still more preferably 37 at% to 43 at%. Here, from the viewpoint of increasing the lithium ion conductivity, the content of Li is preferably 30 at% or more, more preferably 35 at% or more, and still more preferably 37 at% or more. From the viewpoint of widening the vitrification range, the content of Li is preferably 50 at% or less, more preferably 45 at% or less, and still more preferably 43 at% or less.

In the sulfide solid electrolyte according to the present embodiment, P is an element that forms a network of glass, and a P-S bond has high resistance to both oxidation and reduction among sulfides. Therefore, the solid electrolyte has a wide potential window and excellent electrochemical stability.

In the composition of the sulfide solid electrolyte, the content of P is preferably 5 at% to 15 at%, more preferably 6 at% to 13 at%, and still more preferably 7 at% to 12 at%. Here, from the viewpoint of widening the vitrification range, the content of P is preferably 5 at% or more, more preferably 6 at% or more, and still more preferably 7 at% or more. From the viewpoint of increasing the lithium ion conductivity, the content of P is preferably 15 at% or less, more preferably 13 at% or less, and still more preferably 12 at% or less.

In the sulfide solid electrolyte according to the present embodiment, S is an element that forms a P-S bond together with P, and is an essential element for forming a glass phase.

In the composition of the sulfide solid electrolyte, the content of S is preferably 30 at% to 60 at%, more preferably 33 at% to 50 at%, and still more preferably 35 at% to 47 at%. Here, from the viewpoint of widening the vitrification range, the content of S is preferably 30 at% or more, more preferably 33 at% or more, and still more preferably 35 at% or more. From the viewpoint of increasing the lithium ion conductivity, the content of S is preferably 60 at% or less, more preferably 50 at% or less, and still more preferably 47 at% or less.

When the sulfide solid electrolyte according to the present embodiment contains Ha, Ha is an element that contributes to a high lithium ion conductivity.

In the composition of the sulfide solid electrolyte, the content of Ha is preferably 1 at% to 12 at%, more preferably 3 at% to 10 at%, and still more preferably 3.5 at% to 8 at%. From the viewpoint of obtaining the high lithium ion conductivity, the content of Ha is preferably 1 at% or more, more preferably 3 at% or more, and still more preferably 3.5 at% or more. From the viewpoint of preventing precipitation of lithium halide crystals, the content of Ha is preferably 12 at% or less, more preferably 10 at% or less, and still more preferably 8 at% or less. Here, the content of Ha means the total content of F, Cl, Br, and I.

Ha is at least one selected from the group consisting of F, Cl, Br, and I, and as described above, it is preferable to contain at least one of Cl and Br, and it is more preferable to contain Br, from the viewpoint of obtaining favorable oxidation resistance and favorable water resistance. It is also more preferable to contain both Cl and Br.

For example, in the Ha content, the total content of Cl and Br is preferably 50 at% or more, more preferably 70 at% or more, and may be 100 at%, that is, Ha may only include Cl and Br. Further, the content ratio represented by Cl:Br is preferably 100:0 to 0:100, more preferably 80:20 to 0:100, and still more preferably 60:40 to 0:100.

The sulfide solid electrolyte according to the present embodiment may contain elements other than the above Li, P, S, and Ha as the constituent elements. Examples of the other elements that may be contained include Si, B, Ge, Al, O, Na, K, Mg, Ca, Sr, Ba, Y, Zr, Cr, Zn, Ga, Sn, and Sb.

However, when the other elements constitute oxides such as SiO₂, B₂O₃, P₂O₅, or Al₂O₃, such oxides are preferably not contained since the oxides serve as a crystal nucleus. The total content of the oxides is preferably 1 mol% or less, more preferably 0.1 mol% or less, and still more preferably 0.05 mol% or less, in terms of mol% based on oxides, and the oxides may be absent, that is, 0 mol%.

The sulfide solid electrolyte according to the present embodiment may contain, for example, Si, B, Ge, Al, Sn, and Sb among the other elements. The Si, B, Ge, Al, Sn, and Sb are elements that can occupy the P site when the sulfide-based glass phase is crystallized.

When the sulfide solid electrolyte according to the present embodiment contains Si as the constituent element, Si has an effect of increasing the viscosity of the molten liquid to promote vitrification. The content of Si is preferably 0 at% to 15 at%, more preferably 0.1 at% to 10 at%, and still more preferably 1 at% to 5 at%. Here, from the viewpoint of suitably obtaining the effect of Si, the content of Si is preferably 0.1 at% or more, and more preferably 1 at% or more. From the viewpoint of electrochemical stability, the content of Si is preferably 15 at% or less, more preferably 10 at% or less, and still more preferably 5 at% or less.

However, when Si has a Si-O bond or is contained as an oxide of SiO₂, as described above, the content of Si is appropriately adjusted such that the total content of the oxides is 1 mol% or less, or such that the total content of oxides serving as a glass network former is 3 mol% to 20 mol%.

When the sulfide solid electrolyte according to the present embodiment contains B as the constituent element, B has an effect of increasing the viscosity of the molten liquid to promote vitrification. The content of B is preferably 0 at% to 15 at%, more preferably 0.1 at% to 10 at%, and still more preferably 1 at% to 5 at%. Here, from the viewpoint of suitably obtaining the effect of B, the content of B is preferably 0.1 at% or more, and more preferably 1 at% or more. From the viewpoint of the lithium ion conductivity, the content of B is preferably 15 at% or less, more preferably 10 at% or less, and still more preferably 5 at% or less.

However, when B has a B-O bond or is contained as an oxide of B₂O₃, as described above, the content of B is appropriately adjusted such that the total content of the oxides is 1 mol% or less, or such that the total content of oxides serving as a glass network former is 3 mol% to 20 mol%.

When the sulfide solid electrolyte according to the present embodiment contains Ge as the constituent element, Ge has an effect of promoting improvement in lithium ion conductivity. The content of Ge is preferably 0 at% to 15 at%, more preferably 0.1 at% to 10 at%, and still more preferably 1 at% to 5 at%. Here, from the viewpoint of the lithium ion conductivity, the content of Ge is preferably 0.1 at% or more, and more preferably 1 at% or more. From the viewpoint of ease of glass formation, the content of Ge is preferably 15 at% or less, more preferably 10 at% or less, and still more preferably 5 at% or less.

However, when Ge has a Ge-O bond or is contained as an oxide of GeO₂, as described above, the content of Ge is appropriately adjusted such that the total content of the oxides is 1 mol% or less.

When the sulfide solid electrolyte according to the present embodiment contains Al as the constituent element, Al has an effect of increasing the viscosity of the molten liquid to promote vitrification. The content of Al is preferably 0 at% to 15 at%, more preferably 0.1 at% to 10 at%, and still more preferably 1 at% to 5 at%. Here, from the viewpoint of suitably obtaining the effect of Al, the content of Al is preferably 0.1 at% or more, and more preferably 1 at% or more. From the viewpoint of the lithium ion conductivity, the content of Al is preferably 15 at% or less, more preferably 10 at% or less, and still more preferably 5 at% or less.

However, when Al has an Al-O bond or is contained as an oxide of Al₂O₃, as described above, the content of Al is appropriately adjusted such that the total content of the oxides is 1 mol% or less, or such that the total content of oxides serving as a glass network former is 3 mol% to 20 mol%.

When the sulfide solid electrolyte according to the present embodiment contains Sn as the constituent element, Sn has an effect of increasing the viscosity of the molten liquid to promote vitrification. The content of Sn is preferably 0 at% to 15 at%, more preferably 0.1 at% to 10 at%, and still more preferably 1 at% to 5 at%. Here, from the viewpoint of suitably obtaining the effect of Sn, the content of Sn is preferably 0.1 at% or more, and more preferably 1 at% or more. From the viewpoint of achieving the high lithium ion conductivity, the content of Sn is preferably 15 at% or less, more preferably 10 at% or less, and still more preferably 5 at% or less.

However, when Sn has a Sn-O bond or is contained as an oxide of SnO₂, as described above, the content of Sn is appropriately adjusted such that the total content of the oxides is 1 mol% or less.

When the sulfide solid electrolyte according to the present embodiment contains Sb as the constituent element, Sb has an effect of increasing the viscosity of the molten liquid to promote vitrification. The content of Sb is preferably 0 at% to 15 at%, more preferably 0.1 at% to 10 at%, and still more preferably 1 at% to 5 at%. Here, from the viewpoint of suitably obtaining the effect of Sb, the content of Sb is preferably 0.1 at% or more, and more preferably 1 at% or more. From the viewpoint of the lithium ion conductivity, the content of Sb is preferably 15 at% or less, more preferably 10 at% or less, and still more preferably 5 at% or less.

However, when Sb has a Sb-O bond or is contained as an oxide of Sb₂O₃, as described above, the Sb content is appropriately adjusted such that the total content of the oxides is 1 mol% or less, or such that the total content of oxides serving as the glass network former is 3 mol% to 20 mol%.

Methods for determining the constituent elements of the sulfide solid electrolyte and the contents (composition ratios) thereof differ depending on the elements. For example, P and S are determined by ICP emission spectroscopy, Li is determined by atomic absorption spectroscopy, and Ha is determined by ion chromatography. Details of each analysis are described later in the section of Examples.

In the sulfide solid electrolyte according to the present embodiment, the sulfide-based glass phase constituting the sulfide solid electrolyte may be crystallized by a heat treatment. In this case, a crystalline phase formed by crystallization of the sulfide-based glass phase may have a Thio-Lisicon or LGPS crystal structure. The Thio-Lisicon or LGPS crystalline phase has a high lithium ion conductivity, and can also be used as a solid electrolyte.

The proportion of the sulfide-based glass phase in the sulfide solid electrolyte according to the present embodiment is preferably 10 mass% or more, more preferably 10 mass% to 100 mass%, still more preferably 20 mass% to 99 mass%, even more preferably 40 mass% to 98 mass%, yet still more preferably 40 mass% to 95 mass%, and particularly preferably 60 mass% to 90 mass%. Here, from the viewpoint of the lithium ion conductivity and moldability, the proportion of the sulfide-based glass phase is preferably 10 mass% or more, more preferably 20 mass% or more, still more preferably 40 mass% or more, and even more preferably 60 mass% or more. The proportion of the sulfide-based glass phase may be 100 mass%, that is, the sulfide solid electrolyte may be composed only of the sulfide-based glass phase. On the other hand, when obtaining the sulfide-based glass phase, the crystalline phase may also form, making it time-consuming and costly to obtain only the sulfide-based glass phase. Therefore, from the viewpoint of productivity of the sulfide solid electrolyte, the proportion of the sulfide-based glass phase is preferably 99 mass% or less, more preferably 98 mass% or less, still more preferably 95 mass% or less, and particularly preferably 90 mass% or less.

The proportion of the sulfide-based glass phase is determined by powdering the sulfide solid electrolyte, performing a powder X-ray diffraction (XRD) measurement together with a crystal powder serving as an internal standard, determining a proportion of crystals, and performing Rietveld analysis by subtracting the proportion from 100 mass%.

The constituent elements and the composition ratios of the sulfide-based glass phase in the present embodiment can be regarded as substantially the same as the constituent elements and the composition ratios of the sulfide solid electrolyte according to the present embodiment. The difference in constituent elements and composition ratios between the two becomes smaller as the proportion of the sulfide-based glass phase in the sulfide solid electrolyte becomes higher.

Therefore, a preferred aspect of the constituent elements and the composition ratios of the sulfide solid electrolyte can be read as a preferred aspect of the constituent elements and the composition ratios of the sulfide-based glass phase.

### <Other Phases>

The sulfide solid electrolyte according to the present embodiment may include phases other than the sulfide-based glass phase. As the other phases, for example, as described above, the crystalline phase formed when producing the sulfide-based glass phase is exemplified. A highly ion-conductive crystalline phase may be contained.

The proportion of such other phases in the sulfide solid electrolyte is preferably 90 mass% or less, more preferably 1 mass% to 80 mass%, still more preferably 2 mass% to 60 mass%, even more preferably 5 mass% to 40 mass%, and particularly preferably 10 mass% to 40 mass%. Here, from the viewpoint of sufficiently exhibiting the characteristics of the sulfide-based glass phase, the proportion of the other phases is preferably 90 mass% or less, more preferably 80 mass% or less, still more preferably 60 mass% or less, and even more preferably 40 mass% or less. The other phases may be absent, but from the viewpoint of the productivity of the sulfide solid electrolyte, the proportion of the other phases is preferably 1 mass% or more, more preferably 2 mass% or more, still more preferably 5 mass% or more, and even more preferably 10 mass% or more.

### <Characteristics of Sulfide Solid Electrolyte>

The sulfide solid electrolyte according to the present embodiment is preferably in a flake shape or sheet shape having a thickness of 5 µm or more.

The thickness of the sulfide solid electrolyte is determined by a thickness gauge or the like. When the long side of the surface (maximum diameter) of each sulfide solid electrolyte that is observed by surface observation with a SEM, an optical microscope, or the like is 5 or more with respect to the thickness, the sulfide solid electrolyte can be determined to have a flake shape or a sheet shape.

The sulfide solid electrolyte is obtained in a powder shape when produced by, for example, a mechanical milling method. However, the sulfide solid electrolyte according to the present embodiment can be a flake-shaped or sheet-shaped sulfide solid electrolyte as described above by adopting a melting method to be described later and adopting an extremely high cooling rate. Therefore, the sulfide solid electrolyte according to the present embodiment can also achieve high strength.

The thickness of the sulfide solid electrolyte is preferably 5 µm or more, more preferably 10 µm to 5,000 µm, and still more preferably 20 µm to 1,000 µm. Here, from the viewpoint of handling, the thickness is preferably 5 µm or more, more preferably 10 µm or more, and still more preferably 20 µm or more. From the viewpoint of producing a thin battery, the thickness is preferably 5,000 µm or less, and more preferably 1,000 µm or less.

The sulfide solid electrolyte according to the present embodiment preferably has a lithium ion conductivity of more than 1 mS/cm at 25°C when formed into a powder compact at 380 MPa. This can be achieved due to a high lithium ion conductivity of the sulfide-based glass phase. Since it is difficult to extract only the sulfide-based glass phase from the sulfide solid electrolyte, a level of the lithium ion conductivity of the sulfide-based glass phase is evaluated by the lithium ion conductivity of the sulfide solid electrolyte containing the sulfide-based glass phase.

The reason why the lithium ion conductivity of the sulfide-based glass phase in the present embodiment is higher than that of the sulfide-based glass in the related art is not entirely clear, but it is considered that this may be due to the fact that even a so-called glass phase (amorphous phase) is not a completely irregular structure devoid of any regular atomic arrangement. That is, the sulfide-based glass phase in the present embodiment is a glass phase having a certain degree of order, that is, a periodic structure, and is believed to contribute to achieving high lithium ion conductivity.

The lithium ion conductivity of the sulfide solid electrolyte according to the present embodiment is preferably more than 1 mS/cm, and a value thereof changes depending on the composition or the proportion of the sulfide-based glass phase.

For example, the lithium ion conductivity in a composition in which the Br content of Ha is 90 at% or more is more preferably 1.3 mS/cm or more, and the lithium ion conductivity in a composition in which the Cl content of Ha is 90 at% or more is more preferably 1.1 mS/cm or more.

The lithium ion conductivity in the present description can be obtained by an AC impedance measurement using, as a measurement sample, a powder compact obtained by compacting a powder of the sulfide solid electrolyte at 380 MPa. Specifically, the AC impedance measurement of the measurement sample is performed at a measurement frequency of 100 Hz to 1 MHz, a measurement voltage of 100 mV, and a measurement temperature of 25°C, and a value determined from the obtained Nyquist plots is regarded as the lithium ion conductivity.

The amount of H₂S generated when the sulfide solid electrolyte according to the present embodiment is held in an atmosphere having a dew point of -20°C for 5 hours is preferably 10 mL/g or less, more preferably 1 mL/g or less, still more preferably 0.1 mL/g or less, and the smaller the more preferred.

More specific measurement conditions of the amount of H₂S generated are as follows.

First, the sulfide solid electrolyte is passed through a 100 µm mesh to obtain a powder having an average particle size of 10 µm to 20 µm. Then, the amount of hydrogen sulfide (H₂S) generated, as measured when 10 mg of such a powder is exposed for 5 hours under a flow of nitrogen (N₂) gas humidified to a dew point of -20°C at a flow rate of 0.5 L/min, is monitored, and the total amount thereof is defined as the amount of H₂S generated.

The amount of H₂S generated is a value serving as an index of hydrolysis resistance, that is, water resistance of the sulfide solid electrolyte, and can be achieved by increasing the content of the sulfide-based glass phase or by incorporating Ha as the constituent element. In particular, it is preferable to contain at least one of Cl and Br as Ha, and it is more preferable to contain Br. It is also more preferable to contain both Cl and Br.

The sulfide solid electrolyte according to the present embodiment can be formed into a bulk inorganic sheet, and is suitable as an electrolyte of a lithium ion secondary battery. The inorganic sheet can be used, for example, as a separator layer. In this case, the separator layer can be composed only of the inorganic sheet composed of the sulfide solid electrolyte. However, it is not excluded to further use other components such as a binder in the separator layer.

The content of the sulfide solid electrolyte according to the present embodiment with respect to the entire solid electrolyte layer is preferably 80 mass% or more, and more preferably 90 mass% or more.

The sulfide solid electrolyte according to the present embodiment may be pulverized from a flake shape or a sheet shape into a powder shape. Even in the case of a powder shape, the effect of high strength possessed by the sulfide solid electrolyte can be exhibited.

The sulfide solid electrolyte in a powder shape may be mixed with an electrode active material, such as a positive electrode active material or a negative electrode active material, and used as an electrode layer, such as a positive electrode layer or a negative electrode layer.

It is considered that by including the powder of the sulfide solid electrolyte according to the present embodiment in the electrode layer, cracking and deformation of the electrode layer can be prevented even when a volume change occurs due to expansion and contraction of the electrode active material during charge and discharge.

As the positive electrode active material or negative electrode active material used for the positive electrode layer or negative electrode layer, a current collector, a binder, a conductive aid, and the like, known materials according to the related art can be used.

The average particle size (D50) of the sulfide solid electrolyte according to the present embodiment is preferably 0.1 µm to 300 µm, more preferably 0.3 µm to 50 µm, and still more preferably 0.5 µm to 5 µm. Here, from the viewpoint of reducing a load in a fine pulverization step when the sulfide solid electrolyte is used in a secondary battery, the average particle size is preferably 300 µm or less, more preferably 50 µm or less, and still more preferably 5 µm or less. On the other hand, from the viewpoint of ease of handling the powder, the average particle size is preferably 0.1 µm or more, more preferably 0.3 µm or more, and still more preferably 0.5 µm or more.

The average particle size (D50) can be adjusted by performing coarse pulverization on the obtained sulfide solid electrolyte. The coarse pulverization may be performed by a known method in the related art, such as a cutter mill, a planetary ball mill, or a jet mill, and dry pulverization is preferred. Thereafter, by a wet or dry pulverization method such as a bead mill or a jet mill, particles having a finer particle size are used as a solid electrolyte of a positive electrode, a negative electrode, or a separator layer as a battery material.

The lithium ion secondary battery includes the positive electrode layer, the solid electrolyte layer, and the positive electrode layer, and the sulfide solid electrolyte according to the present embodiment is preferably contained in at least one layer selected from the group consisting of the positive electrode layer, the solid electrolyte layer, and the positive electrode layer.

As a material of an outer casing of the lithium ion secondary battery, known materials according to the related art may also be used. As a shape of the lithium ion secondary battery, known shapes according to the related art may be used, and examples of the shape of the lithium ion secondary battery include a coin shape, a sheet shape (film shape), a folded shape, a wound cylindrical shape with a bottom, and a button shape. The shape thereof can be appropriately selected according to the application.

### <<Method for Producing Sulfide Solid Electrolyte>>

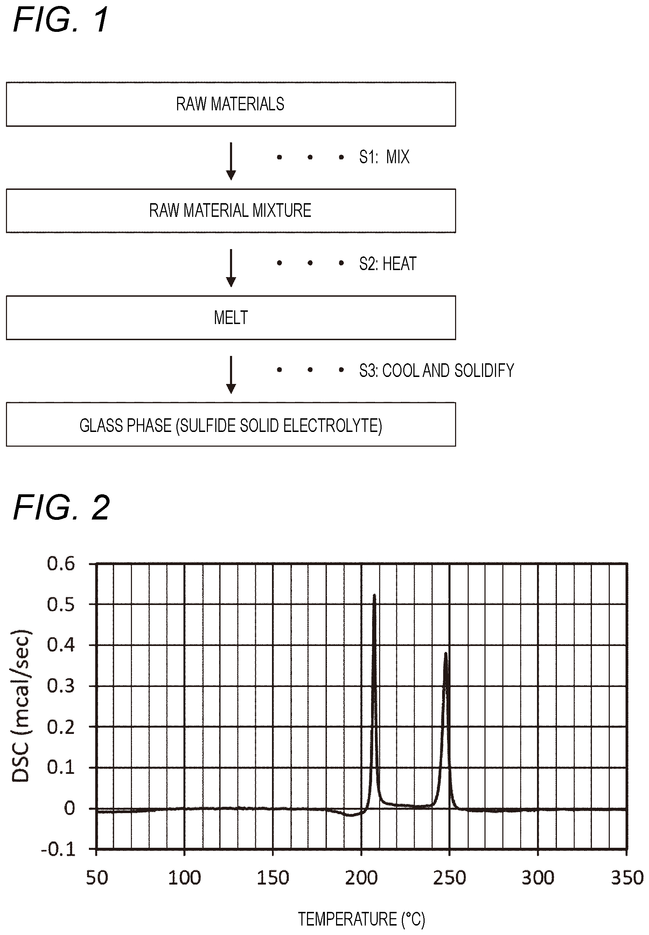

The method for producing a sulfide solid electrolyte according to the present embodiment includes the following step 1 to step 3 in order as step S1 to step S3 as illustrated in FIG. 1.
Step S1: step 1 of mixing raw materials to obtain a raw material mixture containing Li, P, and S
Step S2: step 2 of heating the raw material mixture obtained in step 1 to obtain a melt
Step S3: step 3 of cooling and solidifying the melt obtained in step 2 to obtain a glass phase

The heating in step 2 and the cooling and solidifying in step 3 are performed under ambient pressure, and a cooling rate in the cooling and solidifying is 100°C/sec or more. During the heating in step 2, the molten liquid is not stirred or stirred under a condition of less than 40 rpm using a stirrer or the like. Thereby, the sulfide solid electrolyte described in the above <<Sulfide Solid Electrolyte>> can be obtained. Specifically, a sulfide solid electrolyte containing a sulfide-based glass phase and having an exothermic peak at which a highly ion-conductive crystal is precipitated and which can be separated into two or more peaks having a temperature difference between peak tops of 0.5 or more, can be obtained. In the present description, "under ambient pressure" means a pressure range of about (gauge pressure ± 15 kPa).

In the above step 1, the raw materials are preferably mixed such that the composition of the obtained sulfide solid electrolyte satisfies Li: 30 at% to 50 at%, P: 5 at% to 15 at%, and S: 30 at% to 60 at%.

Each step is described below.

### <Step 1>

Step S1 in the present embodiment is step 1 of mixing raw materials to obtain a raw material mixture containing Li, P, and S.

Specifically, the raw material mixture is obtained by mixing a raw material containing a Li element, a raw material containing a P element, and a raw material containing an S element. When it is desired to obtain a glass phase further containing Ha as the constituent element, in addition to the raw material containing the Li element, the raw material containing the P element, and the raw material containing the S element, a raw material containing an Ha element is further mixed to obtain a raw material mixture containing Li, P, S, and Ha. Here, the Ha element is at least one element selected from the group consisting of F, Cl, Br, and I.

Examples of the raw material containing the Li element include lithium compounds such as lithium sulfide (Li₂S), lithium carbonate (Li₂CO₃), lithium sulfate (Li₂SO₄), lithium oxide (Li₂O), and lithium hydroxide (LiOH), and metallic lithium. The substances containing the Li element may be used alone or in combination of two or more kinds thereof.

As the raw material containing the Li element, lithium sulfide is preferably used from the viewpoint of obtaining the sulfide-based glass phase. In the case in which the obtained sulfide solid electrolyte contains a halogen element, a lithium halide (LiHa, Ha is a halogen element) is also preferred as the raw material containing the Li element. The lithium halide is to be described later.

Examples of the raw material containing the P element include phosphorus sulfides such as phosphorus pentasulfide (P₂S₅) and phosphorus trisulfide (P₂S₃), phosphorus compounds such as sodium phosphate (Na₃PO₄), and elemental phosphorus. The substances containing the P element may be used alone or in combination of two or more kinds thereof.

The raw material containing the P element is preferably phosphorus sulfides, and more preferably phosphorus pentasulfide (P₂S₅), from the viewpoint of preventing the inclusion of elements other than the elements constituting the target sulfide solid electrolyte.

Examples of the raw material containing the S element include lithium sulfide (Li₂S), phosphorus sulfides such as phosphorus trisulfide (P₂S₃) and phosphorus pentasulfide (P₂S₅), other sulfur compounds containing phosphorus, and a sulfur-containing compound. Examples of the sulfur-containing compound include H₂S, CS₂, iron sulfides (such as FeS, Fe₂S₃, FeS₂, and Fe₁₋ₓS), bismuth sulfide (Bi₂S₃), and copper sulfides (such as CuS, Cu₂S, and Cu₁₋ₓS). The substances containing the S element may be used alone or in combination of two or more kinds thereof.

The raw material containing the S element is preferably lithium sulfide or phosphorus sulfides, and more preferably phosphorus pentasulfide (P₂S₅) as the phosphorus sulfide, from the viewpoint of preventing the inclusion of elements other than the elements constituting the target sulfide solid electrolyte. Lithium sulfide is a compound serving as both the raw material containing the Li element and the raw material containing the S element, and the phosphorus sulfide is a compound serving as both the raw material containing the S element and the raw material containing the P element.

Examples of the raw material containing the Ha element include lithium halides such as lithium fluoride (LiF), lithium chloride (LiCl), lithium bromide (LiBr), and lithium iodide (LiI), phosphorus halides, phosphoryl halides, sulfur halides, sodium halides, and boron halides. The substances containing the Ha element may be used alone or in combination of two or more kinds thereof.

From the viewpoint of reactivity, the raw material containing the Ha element is preferably the lithium halides, more preferably LiCl, LiBr, or LiI, and still more preferably LiCl or LiBr.

The raw material mixture may be obtained by mixing raw materials further containing other elements in accordance with a composition of the desired sulfide solid electrolyte.

As described above, examples of the other elements include Si, B, Ge, Al, O, Na, K, Mg, Ca, Sr, Ba, Y, Zr, Cr, Zn, Ga, Sn, and Sb. Among the other elements, for example, Si, B, Ge, Al, Sn, and Sb may be contained. Si, B, Ge, Al, Sn, and Sb are elements that can occupy the P site when the sulfide-based glass phase is crystallized.

As the raw material containing the other elements, a known material in the related art can be used.

Examples of the raw material containing the Si element include SiO₂ and SiS₂. Among them, SiO₂ is more preferred from the viewpoint of the lithium ion conductivity. These compounds may be used alone or in combination of two or more kinds thereof.

Examples of the raw material containing the B element include B₂O₃ and B₂S₃. Among them, from the viewpoint of the water resistance of the glass, B₂O₃ is more preferred. These compounds may be used alone or in combination of two or more kinds thereof.

Examples of the raw material containing the Ge element include GeO₂, GeS, GeS₂, and GeCl₂. Among them, from the viewpoint of the lithium ion conductivity, GeS₂ and GeCl₂ are preferred, and GeS₂ is more preferred. These compounds may be used alone or in combination of two or more kinds thereof.

Examples of the raw material containing the Al element include Al₂S₃, Al₂O₃, and AlCl₃. Among them, from the viewpoint of the lithium ion conductivity and the water resistance, A1₂S₃ and AlCl₃ are preferred, and Al₂S₃ is more preferred. These compounds may be used alone or in combination of two or more kinds thereof.

Examples of the raw material containing the Sn element include SnS, SnS₂, SnO, SnO₂, and SnCl₂. Among them, from the viewpoint of the lithium ion conductivity, SnS₂ and SnCl₂ are preferred, and SnS₂ is more preferred. These compounds may be used alone or in combination of two or more kinds thereof.

Examples of the raw material containing the Sb element include Sb₂S₃, Sb₂O₃, Sb₂O₅, SbCl₃, and SbCls. Among them, from the viewpoint of the lithium ion conductivity and the water resistance, Sb₂S₃ and SbCl₃ are preferred, and Sb₂S₃ is more preferred. These compounds may be used alone or in combination of two or more kinds thereof.

These raw materials are appropriately blended according to the composition of the sulfide solid electrolyte to be obtained. Specifically, in order to obtain the sulfide solid electrolyte described in the above <<Sulfide Solid Electrolyte>>, the raw materials are preferably mixed such that the composition of the obtained glass phase satisfies Li: 30 at% to 50 at%, P: 5 at% to 15 at%, and S: 30 at% to 60 at%. It is more preferable that the sulfide solid electrolyte further contains Ha as the constituent element, and further satisfies Ha: 1 at% to 12 at% in addition to the above composition.

In addition to the above, a preferred embodiment of the obtained sulfide solid electrolyte is the same as the preferred embodiment of the above <<Sulfide Solid Electrolyte>>.

It is preferable to reduce a particle size of each raw material from the viewpoint of shortening a holding time in the heating and melting in the subsequent step 2. When the particle size of the raw material is too large, the homogeneity of the sulfide solid electrolyte may be affected, and it is preferable that the particle size of the raw material is small to some extent from such a viewpoint. However, the production method according to the present embodiment is excellent in composition controllability. Therefore, for example, even when a raw material having a particle size that can reduce the homogeneity in a production method in the related art is used, a more homogeneous sulfide solid electrolyte can be produced in the production method according to the present embodiment.

From the viewpoint, specifically, the particle size of each raw material is preferably 1 mm or less, more preferably 500 µm or less, still more preferably 250 µm or less, even more preferably 100 µm or less, and particularly preferably 50 µm or less. The smaller the particle size, the more preferred, the practical lower limit thereof is about 0.1 µm, and the particle size may be 1 µm or more or 5 µm or more.

As described above, according to the production method of the present embodiment, even when a raw material having a relatively large particle size is used, a homogeneous sulfide solid electrolyte is easily obtained. In consideration of this, for example, from the viewpoint of reducing the production cost, the particle size of each raw material may be 10 µm or more, may be 100 µm or more, or may be 250 µm or more.

Accordingly, the particle size of each raw material is preferably 0.1 µm to 1 mm, more preferably 1 µm to 500 µm, still more preferably 5 µm to 250 µm, even more preferably 5 µm to 100 µm, and particularly preferably 5 µm to 50 µm. From the viewpoint of the production cost, the particle size of each raw material is preferably 10 µm to 1 mm, more preferably 100 µm to 1 mm, and still more preferably 250 µm to 500 µm.

In the present description, the particle size of each raw material refers to an average particle size (D50) represented by a median diameter determined from a chart of a volume-based particle size distribution obtained by measuring a particle size distribution using a laser diffraction particle size distribution analyzer MT3300EXII manufactured by Microtrac.

The raw materials can be mixed by, for example, mixing in a mortar, mixing using a medium such as a planetary ball mill, and medium-less mixing such as a pin mill, a powder stirrer, and air flow mixing. The raw materials may be made amorphous by mixing before heating.

### <Step 2>

Step S2 in the present embodiment is step 2 of heating the raw material mixture obtained in step 1 to obtain a melt.

The specific method for heating and melting the raw material mixture is not particularly limited except that the heating is performed under ambient pressure and the molten liquid is not stirred during the heating, or, if stirred, it is stirred under a gentle condition.

In the production method according to the present embodiment, the compositional deviation between the composition of the raw material mixture and the composition of the obtained sulfide solid electrolyte is small by performing the heating for melting the raw material mixture under ambient pressure. Further, by performing the heating in a gas atmosphere containing an S element, the compositional deviation can be further prevented. In the production method according to the present embodiment, the heating and melting is performed in an environment in which an atmosphere is controlled under ambient pressure, and it is not necessary to perform the heating and melting in a sealed tube. However, the use of the sealed tube is not excluded at all.

Here, a difference between the sealed tube and the environment in which the atmosphere is controlled under ambient pressure is that the pressure inside the sealed tube is under vacuum, that is, less than (gauge pressure - 15 kPa), whereas the pressure inside the container during the heating and melting in the environment in which the atmosphere is controlled under ambient pressure is within a range of (gauge pressure ± 15 kPa).

That is, in the production method according to the present embodiment, the heating and melting in step 2 is performed under ambient pressure of (gauge pressure ± 15 kPa). The composition ratio represented by [P/Li] of the obtained sulfide solid electrolyte with respect to the composition ratio represented by [P/Li] of the raw material mixture at this time is preferably 95% to 105%.

The pressure during the heating and melting may be under ambient pressure of (gauge pressure ± 15 kPa), and is preferably (gauge pressure ± 10 kPa), more preferably (gauge pressure ± 5 kPa), and still more preferably (gauge pressure ± 2 kPa).

The composition ratio represented by [P/Li] of the obtained sulfide solid electrolyte with respect to the composition ratio represented by [P/Li] of the raw material mixture at this time is more preferably 95% to 105%, still more preferably 97% to 103%, and even more preferably 99% to 101%, and the closer to 100%, the more preferred. Here, the above composition ratio is preferably 95% or more, more preferably 97% or more, and still more preferably 99% or more, and is preferably 105% or less, more preferably 103% or less, and still more preferably 101% or less.

Regarding the composition ratio represented by [P/Li] of the obtained sulfide solid electrolyte with respect to the composition ratio represented by [P/Li] of the raw material mixture, Li is an element that is less volatile, and P is an element that is more volatile. Therefore, comparison of the composition ratio represented by [P/Li] between the raw material mixture and the sulfide solid electrolyte is appropriate as an index of the compositional deviation between the composition of the raw material mixture and the composition of the obtained sulfide solid electrolyte.

During the heating, the raw material mixture and the molten liquid which is a melt obtained by melting the raw material mixture are not stirred as described above, or are stirred under a gentle condition if stirred. Accordingly, the molten liquid structure can be made a heterogeneous structure to some extent, and a sulfide-based glass phase maintaining such a structure can be formed by rapid cooling in the subsequent step 3.

When the molten liquid is not stirred, a stirrer is not placed in the container containing the raw material mixture, and the heating may be performed while the container is left standing.

If the molten liquid is stirred, as a gentle condition, the stirring is performed under a condition of less than 40 rpm using a stirrer, that is, a stirring blade. However, the above condition is not limited thereto.

Examples of the stirring method include shaking in addition to the stirring using a stirrer. The degree of stirring may also vary depending on the type and size of a stirring container such as a general-purpose container, a sealed container, or a pressurized container.

In the production method according to the present embodiment, a sealed container may be used, and the degree of stirring may be approximately the same as or gentler than the degree of stirring when the stirrer is rotated at less than 40 rpm.

When the molten liquid is stirred using a stirrer, the rotation speed thereof is set to less than 40 rpm. The rotation speed is preferably 30 rpm or less, and more preferably 20 rpm or less.

In addition to stirring using the stirrer placed in the container as described above, the stirring may be performed by shaking, thermal convection, or the like, and in this case, the stirring force is set to be equal to or less than a stirring intensity with which the molten liquid in the container is uniformly mixed within 10 minutes from the start of stirring.

Examples of the heat-resistant container containing the raw material mixture include a heat-resistant container made of carbon, a heat-resistant container containing an oxide such as quartz, quartz glass, borosilicate glass, aluminosilicate glass, alumina, zirconia, and mullite, a heat-resistant container containing a nitride such as silicon nitride and boron nitride, and a heat-resistant container containing a carbide such as silicon carbide. These heat-resistant containers may have a bulk formed of the above material, or may be a container having a layer made of carbon, an oxide, a nitride, a carbide, or the like, such as a carbon-coated quartz tube.

The melting temperature when the raw material mixture is heated varies depending on the raw materials to be used and the composition of the raw material mixture, and is, for example, preferably 600°C to 950°C, more preferably 630°C to 850°C, and still more preferably 650°C to 750°C. Here, the melting temperature is preferably 600°C or higher, more preferably 630°C or higher, and still more preferably 650°C or higher, from the viewpoint of the reaction rate. From the viewpoint of preventing the compositional deviation due to volatilization of the components, the melting temperature is preferably 950°C or lower, more preferably 850°C or lower, and still more preferably 750°C or lower.

The time for the heating and melting varies depending on a scale, but is preferably 10 minutes to 10 hours, more preferably 30 minutes to 9.5 hours, still more preferably 45 minutes to 9 hours, and particularly preferably 1 hour to 9 hours. Here, the time for the heating and melting is preferably 10 minutes or more, more preferably 30 minutes or more, still more preferably 45 minutes or more, and particularly preferably 1 hour or more, from the viewpoint of allowing the reaction to proceed smoothly. The time for the heating and melting is preferably 10 hours or shorter, more preferably 9.5 hours or shorter, and still more preferably 9 hours or shorter, from the viewpoint of productivity.

The atmosphere in the container during the heating and melting is not particularly limited. For example, the atmosphere may be a nitrogen atmosphere, an argon atmosphere, or a gas atmosphere containing an S element. Among them, the gas atmosphere containing an S element is preferred from the viewpoint of more suitably preventing the compositional deviation.

When using the gas atmosphere containing an S element, examples of the S element source include a sulfur gas, a hydrogen sulfide gas, and a sulfur dioxide gas, and it is preferable to contain a sulfur gas from the viewpoint of reactivity with the raw materials.

The introduction of the gas containing an S element may be achieved by adding an elemental sulfur powder and vaporizing it by heating during the heating and melting to form the gas containing an S element. The elemental sulfur powder may be added together with the raw materials when mixing the raw materials to obtain the raw material mixture, or may be separately added after the raw material mixture is obtained. However, when the elemental sulfur powder is added together with the raw materials in obtaining the raw material mixture, the mass of the elemental sulfur powder is not included in the mass of the obtained raw material mixture.

As the gas containing an S element, the sulfur gas, the hydrogen sulfide gas, the sulfur dioxide gas, or the like may be introduced, and the gas containing an S element obtained by adding the elemental sulfur powder may be introduced together.

As the gas containing an S element, a gas serving as the S element source may be used as a mixed gas with, for example, an inert gas. The mixing proportion with the inert gas is free, and is not particularly limited as long as a cumulative introduction amount of the S element with respect to the mass of the raw material mixture can be a desired value.

Examples of the inert gas include a nitrogen gas, an argon gas, and a helium gas, which may be used alone or in combination of two or more kinds thereof.

The dew point during the heating and melting is preferably -20°C or lower, and a lower limit thereof is not particularly limited and is usually about -80°C. The oxygen concentration is preferably 1000 ppm by volume or less.

The dissolution of the melt of the raw material mixture in step 2 can be confirmed by the absence of a peak derived from a crystal in a high-temperature X-ray diffraction measurement. It can also be confirmed by heating at a predetermined temperature and tilting the melt to confirm the presence or absence of fluidity.

### <Step 3>

Step S3 in the present embodiment is step 3 of cooling and solidifying the melt obtained in step 2 to obtain a sulfide-based glass phase.

The cooling and solidifying is performed under ambient pressure. Here, ambient pressure means an atmosphere under a pressure of about (gauge pressure ± 15 kPa) as described above.

The pressure during the cooling and solidifying may be under ambient pressure of (gauge pressure ± 15 kPa), and is preferably (gauge pressure ± 10 kPa), more preferably (gauge pressure ± 5 kPa), and still more preferably (gauge pressure ± 2 kPa).

The cooling rate in the cooling and solidifying may be 100°C/sec or more, preferably 100°C/sec to 100,000°C/sec, more preferably 500°C/sec to 50,000°C/sec, and still more preferably 1,000°C/sec to 10,000°C/sec. Here, it has been found that the sulfide solid electrolyte containing the sulfide-based glass phase in the present embodiment can be obtained by performing ultra-rapid cooling at a cooling rate of 100°C/sec or more, which is higher than that in the related art.

This sulfide-based glass phase can achieve a lithium ion conductivity higher than that of the sulfide-based glass in the related art. In addition to the above heating, by performing the cooling and solidifying under ambient pressure, the compositional deviation between the composition in the raw material mixture and the composition of the obtained sulfide solid electrolyte can also be reduced.

The cooling rate is 100°C/sec or more, and from the viewpoint of ease of glass formation, the cooling rate is preferably 500°C/sec or more, and more preferably 1,000°C/sec or more. The upper limit of the cooling rate is not particularly limited, and from the viewpoint of facility capacity, the cooling rate is preferably 100,000°C/sec or less, more preferably 50,000°C/sec or less, and still more preferably 10,000°C/sec or less.

The ultra-rapid cooling as described above can be achieved by using, for example, twin roll rapid cooling.

The sulfide solid electrolyte containing the sulfide-based glass phase obtained as described above may be used as it is in at least one or more selected from the group consisting of a positive electrode layer, a solid electrolyte layer, and a negative electrode layer, or may be used after pulverization, drying, or the like according to the application or the like.

In particular, the sulfide solid electrolyte according to the present embodiment can be formed into a bulk inorganic sheet as described above, and thus is suitable as a separator layer. It is preferable that the sulfide solid electrolyte according to the present embodiment is pulverized into a powder and contained in the electrode layer such as a positive electrode layer or a negative electrode layer, from the viewpoint of preventing cracking or deformation of the electrode layer by utilizing high strength.

Further, the sulfide solid electrolyte according to the present embodiment may be subjected to a heat treatment at a temperature equal to or higher than a crystallization temperature of the sulfide-based glass phase to crystallize at least a part of the sulfide-based glass phase, and used as described above. In this case, the crystalline phase derived from the sulfide-based glass phase can have a Thio-Lisicon or LGPS crystal structure having a high lithium ion conductivity.

### EXAMPLES

Hereinafter, the present invention is specifically described with reference to Examples, but the present invention is not limited thereto.

Example 1 is a Reference Example, and Example 2 to Example4 are Inventive Examples.

### <<Test Example>>

### <Example 1>

Under a dry nitrogen gas atmosphere, a lithium sulfide powder (manufactured by Sigma, purity 99.98%), a phosphorus pentasulfide powder (manufactured by Sigma, purity 99%), and a lithium bromide powder (manufactured by Sigma, purity 99.995%) were weighed so as to have a composition ratio of Li_{3.4}P_{1.0}S_{4.0}Br_{0.3} (Li: 38.9 at%, P: 11.4 at%, S: 45.9 at%, and Br: 3.8 at%), and mixed in a mortar to obtain a raw material mixture (step 1).

The obtained raw material mixture was put into a carbon container together with a stirrer under an S element-containing nitrogen atmosphere having a dew point of -50°C or lower and containing a sulfur powder (manufactured by Sigma, purity 99.998%) as an S element source, and the container was put into an electric furnace inside a glove box. Then, heating was performed for 1 hour under conditions of pressure: gauge pressure + 1 kPa, temperature: 750°C, and rotation speed: 40 rpm to obtain a melt (step 2).

Next, the tip of the container was heated and melted, and the molten liquid which is a melt was poured onto twin rolls and cooled to room temperature at a cooling rate of 10,000°C/sec to obtain a sulfide solid electrolyte (step 3). The pressure at this time was (gauge pressure + 1 kPa), and the cooling rate was adjusted by the discharge flow rate of the molten liquid, roll gap of the twin rolls, and rotation speed.

### (Example 2 to Example 4)

The sulfide solid electrolyte was obtained in the same manner as in Example 1 except that the rotation speed was changed to 0 rpm (no rotation, Example 2), 5 rpm (Example 3), or 10 rpm (Example 4) when the raw material mixture was heated in step 2.

### <<Evaluation>>

### <Composition of Sulfide-Based Glass Phase>

The obtained sulfide solid electrolyte was weighed in a glove box, dissolved in an alkaline aqueous solution, and subjected to compositional analysis for each element.

Specifically, P and S were subjected to ICP emission spectrometry (apparatus: model number PS3520UVDDII, manufactured by Hitachi High-Tech Science Corporation).

Li was analyzed by atomic absorption spectroscopy (apparatus: model number ZA3300, manufactured by Hitachi High-Tech Corporation, CsCl was added to give a solution concentration of 0.1% in the Li measurement).

Br was analyzed by ion chromatography (apparatus: model number ICS-2100 (column: AS11HC) manufactured by Thermo Fisher Scientific K.K., and a small amount of H₂O₂ was added and diluted with ultrapure water for a measurement).

The results are shown in Table 1. The composition here is a blended composition in which P is normalized to 1.0. In each Example, the composition of the obtained sulfide solid electrolyte did not greatly deviate from the composition of the raw material mixture.

### <Proportion of Sulfide-based Glass Phase>

The obtained sulfide solid electrolyte was pulverized in a mortar and then passed through a 100 µm sieve to obtain a powder having an average particle size (D50) of about 20 µm, which was used as a sample.

Using an X-ray diffraction (XRD) apparatus (manufactured by Rigaku Corporation, SmartLab), measurements were performed under the following conditions: X-ray source: CuKα radiation (λ=1.5418 Å), tube voltage: 45 kV, tube current: 200 mA, scan angle: 10° to 60°, scan speed: 5°/min, step size: 0.01°/step, under an atmosphere without exposure to air.

In the obtained XRD pattern, a diffraction peak other than silicon added as an internal standard was not obtained, and it was confirmed that almost 100 mass% was a glass phase.

### <Exothermic Peak of Highly Ion-conductive Crystal>

The obtained sulfide solid electrolyte was pulverized in a mortar and then passed through a 100 µm sieve to obtain a powder having an average particle size (D50) of about 20 µm, which was used as a sample.

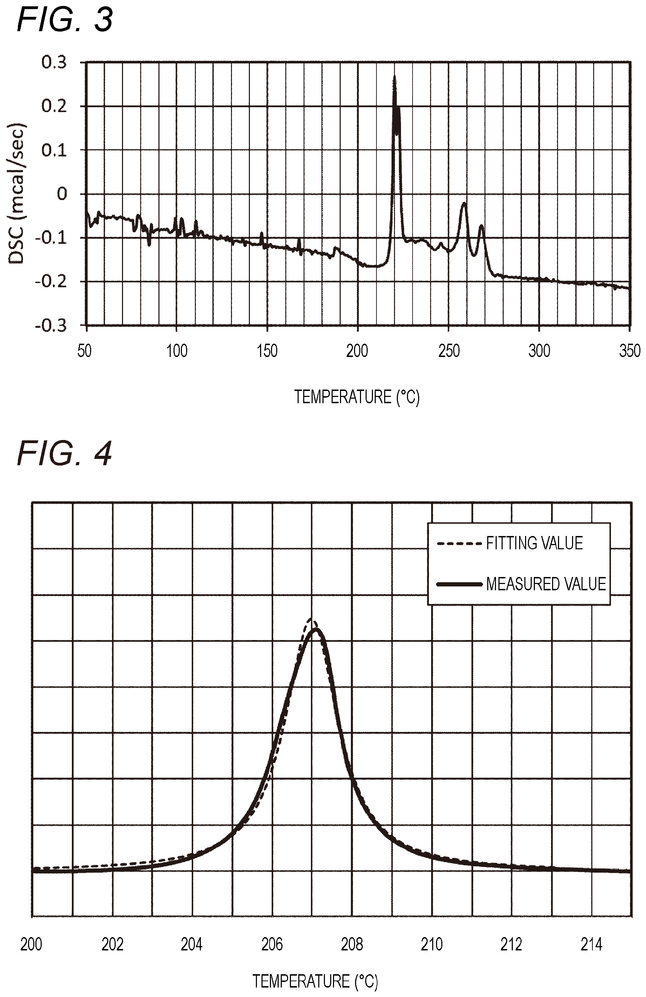

For 20 mg of a sample, a DSC measurement was performed at a heating rate of 5°C/min from 25°C to 350°C using a differential scanning calorimeter (DSC3300 manufactured by BRUKER AXS) to obtain a DSC curve. As an example, a DSC curve of Example 1 is illustrated in FIG. 2, and a DSC curve of Example 2 is illustrated in FIG. 3. In Example 3 and Example 4, as in Example 2 illustrated in FIG. 3, a split exothermic peak was exhibited in the vicinity of 220°C.

Therefore, the sulfide solid electrolytes in Example 1 to Example 4 were heated at the peak top temperature of the exothermic peak (Example 1: 207°C, Example 2: 222°C, Example 3: 226°C, Example 4: 220°C) for 10 minutes, and a change in lithium ion conductivity before and after heating was measured. As a result, it was confirmed that in each Example, the lithium ion conductivity increased twice or more, and the exothermic peak was an exothermic peak at which a highly ion-conductive crystal is precipitated.

Details of the measurement of the lithium ion conductivity are described later.

After confirming that the exothermic peak was a peak at which a highly ion-conductive crystal is precipitated, the DSC curve in a range of 180°C to 280°C was analyzed, and the exothermic peak was analyzed for peak separation.

The analysis of the peak separation was performed by fitting using a Lorentz function. Specifically, after performing baseline correction for the exothermic peak of the DSC curve, a predetermined number of Lorentz functions were added to create a fitting function. Parameters of the fitting function were obtained from curve data of the DSC curve using the least squares method. By performing the peak separation, the peak top temperature of each peak was determined.

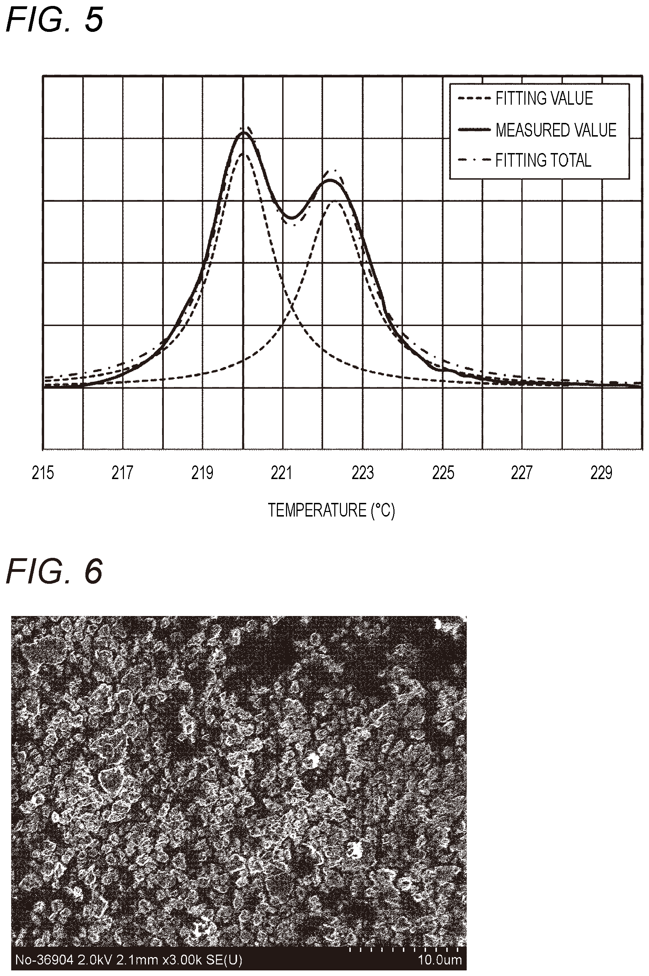

FIG. 4 illustrates a DSC curve obtained by enlarging and curve-fitting the exothermic peak at which a highly ion-conductive crystal is precipitated in Example 1, and FIG. 5 illustrates a DSC curve obtained by enlarging and curve-fitting the exothermic peak at which a highly ion-conductive crystal is precipitated in Example 2. In FIG. 4 and FIG. 5, the solid line is a DSC curve (measured value) actually obtained, and the dotted line is a curve (fitting value) fitted by analysis using the Lorentz function. In FIG. 5, since the peak is separated into two by the analysis, the sum of the separated peaks (fitting total) is indicated by the one-dot chain line. The peak top temperatures T1 and T2 of the peaks after analysis and the temperature difference therebetween were shown in Table 1. In Example 1, since the exothermic peak at which a highly ion-conductive crystal is precipitated could not be separated into two or more peaks, in Table 1, the peak top temperature is recorded as "T1 (°C)", and "T2 (°C)" is indicated as "-".

### <Lithium Ion Conductivity>

The obtained sulfide solid electrolyte was pulverized in a mortar and then passed through a 100 µm sieve to obtain a powder having an average particle size (D50) of about 20 µm, which was used as a sample.

The sample was compressed under a pressure of 380 MPa to prepare a powder compact as a measurement sample, and measured by using an electrochemical impedance spectroscopy (potentiostat/galvanostat VSP, manufactured by Bio-Logic Sciences Instruments). The measurement conditions were a measurement frequency of 100 Hz to 1 MHz, a measurement voltage of 100 mV, and a measurement temperature of 25°C, and the lithium ion conductivity was measured from the obtained Nyquist plot. Results were shown in "σ^{Li+} (mS/cm)"in Table 1.

The lithium ion conductivity after heating was also determined in the same manner as described above for the sulfide solid electrolyte after heating for 10 minutes at the peak top temperature of the exothermic peak described in the above <Exothermic Peak of Highly Ion-conductive Crystal>.

### <Shape>

The obtained sulfide solid electrolyte was observed using an optical microscope under an atmosphere without exposure to air, and the length of the long side of the surface (longest diameter) of each sulfide solid electrolyte was determined. The thickness of each sulfide solid electrolyte was determined by a thickness gauge. The ratio of the long side to the thickness was 1,000.

### <Strength>

The obtained sulfide solid electrolyte was put into a 45 mL zirconia pot in an amount of 2 g without being pulverized and in a flake shape. As the flake-shaped sulfide solid electrolyte, flakes with a thickness of 50 µm to 150 µm and an area of approximately 2 cm² or less were selected.

Zirconia balls having a diameter of 10 mm were also placed in the same zirconia pot, and dry pulverization was performed at 100 rpm for 30 minutes using a planetary ball mill (LP-M2, manufactured by Ito Seisakusho Co., Ltd.). Next, the zirconia balls were collected, zirconia balls having a diameter of 1 mm were placed, 8 g of dibutyl ether was added, and wet pulverization was performed at 200 rpm for 60 minutes. Thereafter, the resultant was dried at 140°C for 6 hours to obtain a powder of the sulfide solid electrolyte.

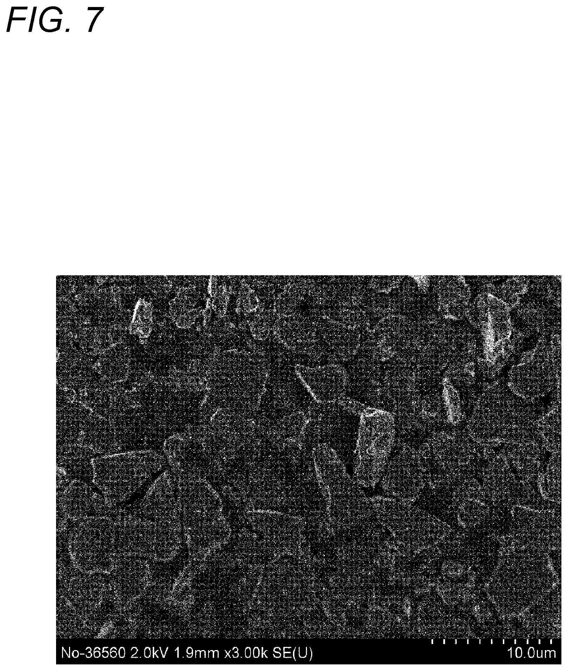

The obtained powder was observed using a scanning electron microscope (SU8230 manufactured by Hitachi High-Tech Corporation) at a magnification such that about 50 particles of the powder fit within the field of view, and the average particle size was obtained. FIGS. 6 and 7 illustrate SEM images of powders obtained by pulverizing the sulfide solid electrolytes of Example 1 and Example 2, respectively, and it can be said that the strength of the sulfide solid electrolyte is higher as the average particle size after pulverization is larger. All operations involving the sulfide solid electrolyte, from the selection of measurement samples to the observation after the pulverization, were performed under an atmosphere without exposure to air.

The results are shown in Table 1, and the evaluation criteria are as follows.
A: The average particle size is 5 µm or more, and the strength is very high and extremely favorable
B: The average particle size is 3 µm or more and less than 5 µm, and the strength is high and favorable
C: The average particle size is less than 3 µm, the strength was low and poor

### <Water Resistance>

The obtained sulfide solid electrolyte was pulverized in a mortar and then passed through a 100 µm sieve to obtain a powder having an average particle size (D50) of about 20 µm, which was used as a sample.

Then, 10 mg of the sample was exposed for 5 hours under a flow of a humidified N₂ gas having a dew point of -20°C, and the concentration of hydrogen sulfide in the gas was monitored to determine the total amount of the hydrogen sulfide generated. The humidified N₂ gas was flowed at 0.5 L/min.

Thus, by detecting the total amount of hydrogen sulfide generated, hydrolysis resistance was evaluated as an index of water resistance. As a detection tube, a hydrogen sulfide concentration meter (Model 3000RS, manufactured by TEKHNE Corporation) was used. As a result, in all Examples, the total amount of hydrogen sulfide generated was 0 mL/g, and favorable water resistance was confirmed.

**[Table 1]**

| | Sulfide solid electrolyte | | | | | | Evaluation | |
|---|---|---|---|---|---|---|---|---|
| | Composition | Production method | | Exothermic peak | | | Strength | σ^{Li+} (mS/cm) |
| | | Method | Stirring condition | T1 (°C) | T2 (°C) | T2 - T1 (°C) | | |
| Example 1 | Li_{3.4}P_{1.0}S_{4.0}Br_{0.3} | Melt quenching method | Rotation speed 40 rpm | 207.0 | - | - | C | 1.5 |
| Example 2 | Li_{3.4}P_{1.0}S_{4.0}Br_{0.3} | Melt quenching method | Without stirring | 220.0 | 222.3 | 2.3 | A | 1.5 |
| Example 3 | Li_{3.4}P_{1.0}S_{4.0}Br_{0.3} | Melt quenching method | Rotation speed 5 rpm | 223.5 | 225.7 | 2.2 | A | 1.5 |
| Example 4 | Li_{3.7}P_{1.0}S_{4.0}Br_{0.3} | Melt quenching method | Rotation speed 10 rpm | 218.3 | 220.1 | 1.8 | B | 1.4 |

From the above results, it was found that the sulfide solid electrolytes of Example 2 to Example 4 had excellent strength while maintaining a high lithium ion conductivity and water resistance equivalent to those of Example 1 which was a Reference Example.

Among them, it was found that the high lithium ion conductivity and water resistance could be achieved by performing the heating and melting and the cooling and solidifying of the raw material mixture under ambient pressure and increasing the cooling rate in the cooling and solidifying. By adopting such a production method, the proportion of the sulfide-based glass phase in the obtained sulfide solid electrolyte can be increased.

In contrast to the above, it was found that fracture toughness was increased and high strength could also be achieved by not stirring the molten liquid during the heating and melting of the raw material mixture (Example 2), or adopting the gentle stirring condition such a stirring at a rotation speed of 5 rpm (Example 3) or 10 rpm (Example 4).

The sulfide solid electrolyte containing the sulfide-based glass phase obtained by a mechanical milling method (MM method) in the related art was in a powder shape, whereas the sulfide solid electrolyte of Example 1 was obtained in a sheet shape. Therefore, the sulfide solid electrolyte of Example 1 is inferior in strength to the sulfide solid electrolyte according to the present embodiment (evaluated as C in the table), however, as compared with the sulfide solid electrolyte by the MM method in the related art, it can be said that the sulfide solid electrolyte of Example 1 has favorable strength at the stage where the strength test as described above can be conducted.

Although the present invention has been described in detail with reference to specific embodiments, it is apparent to those skilled in the art that various changes and modifications can be made without departing from the spirit and scope of the present invention. The present application is based on a Japanese Patent Application (Japanese Patent Application No. 2023-168395) filed on September 28, 2023, the content of which is incorporated herein by reference.

## Claims

1. A sulfide solid electrolyte comprising a sulfide-based glass phase,
wherein the sulfide-based glass phase has an exothermic peak at which a highly ion-conductive crystal is precipitated when subjected to a differential scanning calorimetry measurement at a heating rate of 5°C/min,
the exothermic peak can be separated into two or more peaks, and
a temperature difference between a peak top of a peak on the highest temperature side and a peak top of a peak on the lowest temperature side among the two or more peaks obtained by the peak separation is 0.5°C or higher.

2. The sulfide solid electrolyte according to claim 1, wherein the temperature difference between the peak tops is 20°C or lower.

3. The sulfide solid electrolyte according to claim 1, wherein the exothermic peak is present at 190°C to 250°C.

4. The sulfide solid electrolyte according to claim 1,
wherein the sulfide solid electrolyte comprises Li, P, and S as constituent elements, and
a composition of the sulfide solid electrolyte satisfies Li: 30 at% to 50 at%, P: 5 at% to 15 at%, and S: 30 at% to 60 at%, and 2.5 ≤ Li/P ≤ 7.

5. The sulfide solid electrolyte according to claim 4,
wherein the sulfide solid electrolyte further comprises Ha as a constituent element,
the Ha is at least one selected from the group consisting of F, Cl, Br, and I, and
the composition of the sulfide solid electrolyte further satisfies Ha: 1 at% to 12 at%.

6. The sulfide solid electrolyte according to claim 1, wherein a content of the sulfide-based glass phase is 10 mass% or more.

7. The sulfide solid electrolyte according to claim 1, wherein the sulfide solid electrolyte is in a flake shape or a sheet shape having a thickness of 5 µm or more.

8. A method for producing the sulfide solid electrolyte according to any one of claims 1 to 7, the method comprising: in order,
mixing raw materials to obtain a raw material mixture;
heating the raw material mixture to obtain a melt; and
cooling and solidifying the melt to obtain the sulfide-based glass phase,
wherein during the heating, a molten liquid is not stirred or stirred under a condition of less than 40 rpm using a stirrer,
the heating and the cooling and solidifying are performed under ambient pressure, and
a cooling rate during the cooling and solidifying is 100°C/sec or more.
